# FASCICULE DE BREVET EUROPEEN

(11) **EP 2 219 962 B1**
(45) Date de publication et mention de la délivrance du brevet: **23.12.2015**
(21) Numéro de dépôt: 08850199.4
(22) Date de dépôt: 06.11.2008
(51) Int. Cl.: B65D 19/00

(54) **DISPOSITIF DE CHARGEMENT ET DE DECHARGEMENT POUR CHARIOT DE MANUTENTION**
LADE- UND ENTLADEVORRICHTUNG FÜR FÖRDERWAGEN
LOADING AND UNLOADING DEVICE FOR HANDLING TROLLEY

(30) Priorité: 13.11.2007 FR 0707958
(43) Date de publication de la demande: 25.08.2010
(73) Titulaire: Valeo Systèmes Thermiques, 78321 Le Mesnil St Denis (FR)
(72) Inventeur: PICHEREAU, Olivier, F-72650 La Chapelle Saint Aubin (FR)
(86) Numéro de dépôt international: PCT/EP2008/065091
(87) Numéro de publication internationale: WO 2009/062885

(56) Documents cités:
- EP-A- 0 456 529
- DE-A1- 19 910 528
- DE-U1- 29 615 066
- DE-U1-202006 001 482
- FR-A- 2 508 005
- FR-A- 2 826 330
- US-A- 5 758 771

## Description

L'invention se rapporte au domaine de la manutention et concerne plus particulièrement un dispositif de chargement et de déchargement pour chariot de manutention.

Dans le domaine de la manutention, il est connu d'utiliser des palettes de dimensions normalisées sur lesquelles sont stockées des marchandises, par exemple des cartons ou des bacs de rangement qui eux-mêmes contiennent des articles. Une palette peut ainsi servir à regrouper un certain nombre de marchandises qui sont stockées et/ou transportées conjointement.

Le chargement de marchandises sur une palette constitue une opération appelée « palettisation », tandis que le déchargement des marchandises d'une palette constitue une opération appelée « dépalettisation ». Ces deux opérations sont très souvent longues et fastidieuses et sont consommatrices en temps et en main d'oeuvre.

Les palettes et les marchandises qu'elles reçoivent sont habituellement manipulées par des chariots élévateurs pour les charger sur le plateau d'un camion et les décharger ensuite dans une zone d'entreposage.

Dans une telle zone d'entreposage, constituant une zone de stockage, les marchandises peuvent rester sur la palette et être déchargées au fur et à mesure des besoins.

Mais, il est souvent nécessaire de décharger les marchandises de la palette qui les transportait pour les placer sur des chariots de manutention de plus faibles dimensions qu'une palette standardisée qui serviront à transporter les marchandises vers leur site de destination.

Il peut s'agir par exemple de chariots de manutention du type décrit dans EP 1 227 945 qui, du fait de leur excellente maniabilité, peuvent parvenir dans des zones d'accessibilité réduite ou difficile.

De tels chariots peuvent servir par exemple à acheminer des réceptacles divers, tels que par exemple des bacs de rangement, des cartons ou des caisses, contenant des pièces destinées à des sites de production, comme des chaînes de montage utilisées dans des usines de fabrication.

Ces chariots ont généralement un plateau de chargement de dimensions réduites par rapport à celles d'une palette, typiquement un rectangle d'environ 600 mm x 400 mm, ces dimensions étant données ici à titre purement indicatif, rappel étant fait que les dimensions des palettes sont généralement de 1200 mm x 1000 mm pour les palettes les plus grandes.

Le chargement des réceptacles (par exemple bacs de rangement ou cartons) à partir d'une palette sur le plateau d'un chariot de manutention s'effectue le plus souvent à la main, éventuellement avec l'aide d'un outil tel qu'un crochet, en disposant ces réceptacles en une ou plusieurs piles, directement sur le plateau du chariot. Il en est de même pour l'opération inverse de déchargement lorsque des réceptacles sont déchargés du plateau d'un chariot de manutention pour être chargés sur une palette.

Il en résulte à chaque fois la nécessité d'une opération intermédiaire de transfert, soit du chariot de manutention vers la palette, soit inversement de la palette vers le chariot de manutention, qui est consommatrice en temps et en main d'oeuvre. Une telle opération de manutention est d'une grande pénibilité pour l'opérateur en charge de cette dernière.

L'invention a essentiellement pour but de simplifier les opérations de chargement et de déchargement, en supprimant cette opération intermédiaire de transfert.

L'invention propose à cet effet un dispositif de chargement et de déchargement pour un chariot de manutention comportant un plateau de chargement.

Selon l'invention, le dispositif comprend un socle amovible, par exemple de contour général rectangulaire, et de dimensions adaptées à celles du plateau de chargement du chariot, ce socle présentant une face supérieure généralement plane apte à recevoir des marchandises et entourée d'une bordure périphérique de retenue des marchandises, une face inférieure conformée pour maintenir le socle sur le plateau de chargement du chariot et quatre faces latérales reliant la face supérieure et la face inférieure.

On peut ainsi éliminer les opérations de « palettisation » et « dépalettisation » nécessaires jusqu'à présent du fait que le socle peut être repris directement sur le plateau de chargement du chariot de manutention et inversement être enlevé du plateau de chargement avec les marchandises qu'il transporte. Comme ces socles auront le plus souvent des dimensions inférieures à celles des palettes, il sera possible, par un dimensionnement judicieux des socles par rapport aux palettes, de regrouper par exemple deux socles côte à côte ou inversement de dégrouper deux socles auparavant regroupés.

Pour cela, il est avantageux que le socle soit muni d'organes de verrouillage disposés respectivement le long de deux faces latérales adjacentes pour associer ce socle à au moins un socle adjacent.

Dans la description qui suit, faite seulement à titre d'exemples de réalisation dépourvus de tout caractère limitatif, on se réfère aux dessins annexés, sur lesquels :
- la figure 1 est une vue en perspective d'un dispositif de chargement et de déchargement selon l'invention, réalisé sous la forme d'un socle amovible ;
- la figure 2 est une vue de côté montrant une petite face latérale du socle de la figure 1 ;
- la figure 3 est une vue de côté montrant une grande face latérale du socle de la figure 1 ;
- la figure 4 est une vue de dessus du socle des figures 1 à 3 ;
- la figure 5 est une vue en coupe d'un socle sur la face supérieure duquel un bac est disposé à l'endroit, le socle étant représenté en cours d'installation sur le plateau de chargement d'un chariot de manutention ;
- la figure 6 est une vue en coupe analogue à la figure 5 montrant un bac disposé à l'envers sur la face supérieure du socle, sans le chariot de manutention ;
- la figure 7 est une vue de côté montrant les grandes faces latérales respectives de deux socles juxtaposés dans un plan horizontal ;
- la figure 8 montre schématiquement en plan la disposition de deux socles juxtaposés et leur manipulation par la fourche d'un chariot élévateur ;
- la figure 9 est une vue en plan montrant la disposition juxtaposée de quatre socles selon l'invention et leur manipulation par une fourche d'un chariot élévateur ;
- les figures 10 à 12 montrent trois étapes successives de manipulation en partant de deux chariots de manutention supportant chacun des marchandises par l'intermédiaire d'un socle selon l'invention ;
- la figure 13 est une vue en perspective d'un socle muni d'organes de verrouillage, selon une autre forme de réalisation de l'invention ;
- la figure 14 est une vue en coupe partielle de deux socles adjacents conformes à la figure 13, avant leur verrouillage ;
- la figure 15 est une vue analogue à la figure 14 après verrouillage ;
- les figures 16, 17 et 18 montrent en vue de dessus respectivement la juxtaposition de deux socles, la juxtaposition de quatre socles, et la juxtaposition de cinq socles conformes à la figure 13, ces socles étant réunis et solidarisés par leurs moyens de verrouillage ;
- la figure 19 est une vue en perspective de quatre socles selon la figure 13 disposés de manière adjacente et sur lesquels sont disposées des marchandises tenues par une coiffe et par des sangles réunies par des barres de liaison ;
- la figure 20 est une vue partielle en coupe d'un socle selon la figure 19 avant engagement de la barre de liaison ;
- la figure 21 est une vue analogue à la figure 20 après engagement de la barre de liaison pour réaliser la tension des sangles ; et
- les figures 22 et 23 montrent respectivement l'utilisation de deux barres de liaison pour deux socles adjacents et l'utilisation de quatre barres de liaison pour quatre socles adjacents.

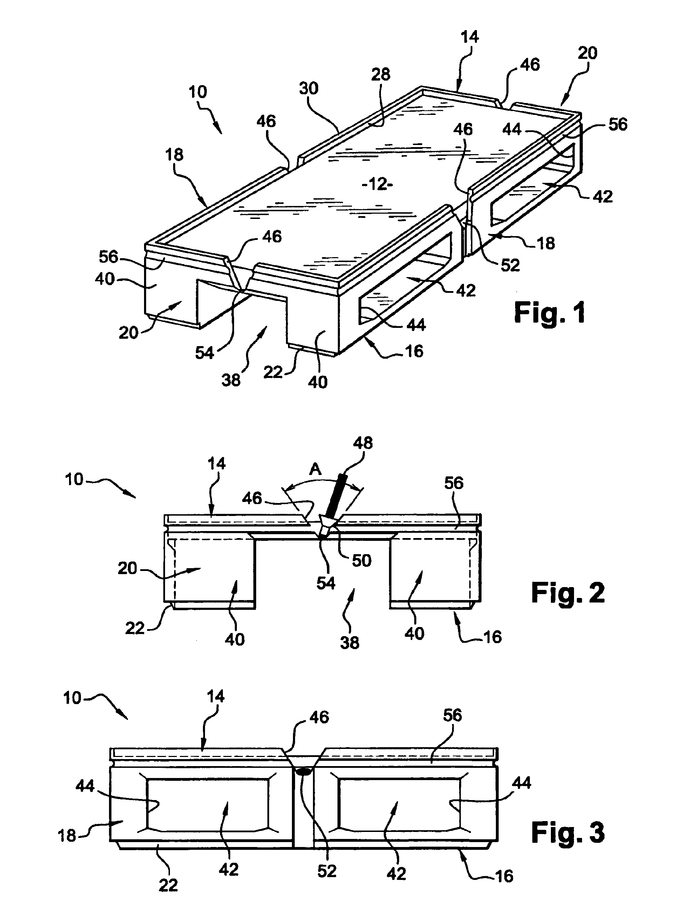

On se réfère d'abord à la figure 1 qui montre un dispositif de chargement et de déchargement destiné à un chariot de manutention comportant un plateau de chargement.

Le dispositif de l'invention comprend un socle 10 amovible de contour général rectangulaire présentant une face supérieure 12 généralement plane, de forme rectangulaire, apte à recevoir des objets (non représentés), par exemple une ou plusieurs piles de marchandises de forme parallélépipédique (non représentées), notamment des cartons ou des bacs de rangement contenant des articles. Cette face supérieure 12 est entourée d'une bordure périphérique 14 servant notamment à maintenir les marchandises disposées sur le socle. Le socle 10 comprend en outre une face inférieure 16 conformée pour maintenir le socle sur le plateau de chargement 26 (non représenté) du chariot 62, ainsi que quatre faces latérales 18 et 20 reliant la face supérieure 12 et la face inférieure 16. Dans l'exemple, ces faces latérales 18 et 20 comprennent deux grandes faces latérales opposées 18 reliées à des grands côtés de la face supérieure, et deux petites faces latérales opposées 20 reliées à des petits côtés de la face supérieure 12.

Sur la vue en perspective de la figure 1 on aperçoit complètement l'une des grandes faces latérales 18 et l'une des petites faces latérales 20. Les deux faces opposées, non visibles sur la figure 1, sont de même configuration.

À sa partie inférieure, le socle 10 comprend une échancrure périphérique 22 formée à la jonction de la face inférieure 16 et des quatre faces latérales 18 et 20. Cette échancrure 22 est réalisée en dépouille pour faciliter son emboîtement.

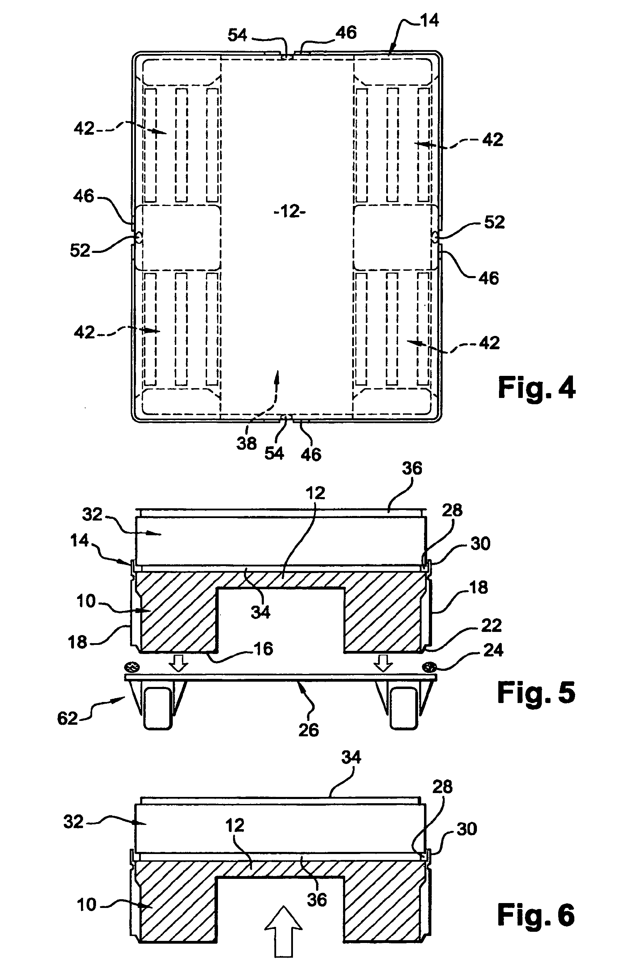

Comme on le voit sur la figure 5, cette échancrure périphérique 22 forme un décrochement et est dimensionnée pour s'emboîter dans un cadre périphérique 24 de forme rectangulaire que comporte le plateau de chargement 26 d'un chariot de manutention 62 pour positionner et maintenir le socle 10 sur le cadre périphérique 24. Autrement dit, le socle 10 peut s'emboîter par un mouvement vertical de haut en bas dans le cadre 24 et, inversement, se dégager de ce cadre par un mouvement vertical de bas en haut. Ainsi par un simple mouvement d'emboîtement, le socle 10 est parfaitement positionné et maintenu sur le plateau de chargement 26 du chariot 62 dans une position adéquate.

Cette échancrure périphérique 22 peut servir aussi à empiler ou gerber des socles 10 les uns sur les autres. En effet, l'échancrure périphérique 22 d'un premier socle 10 est apte à s'emboîter dans la bordure périphérique 14 d'un second socle 10 situé immédiatement en-dessous du premier socle dans une pile de socles 10 superposés. Ainsi, l'échancrure 22 possède une double fonction, celle de permettre le positionnement du socle 10 sur le cadre périphérique 24 d'un plateau de chargement 26 et celle de permettre un gerbage ou une superposition de socles 10 dans une position bien définie.

La bordure périphérique 14 fait saillie au-dessus de la face supérieure 12 et elle prolonge les faces latérales 18 et 20. Cette bordure périphérique 14 comprend une face interne 28 qui se raccorde perpendiculairement à la face supérieure 12 du socle 10 et un bord supérieur 30 qui relie la face interne 28 aux faces latérales 18 et 20 (figure 1). La bordure périphérique 14 sert aussi à retenir une ou plusieurs piles de marchandises. Ainsi, comme on le voit sur la figure 5, un bac de rangement 32 disposé à l'endroit vient reposer sur la face supérieure 12 en étant retenu par la face interne 28. C'est donc le fond 34 du bac de rangement 32 qui vient reposer sur cette face supérieure 12. Ce bac 32 comporte par ailleurs un pourtour en saillie 36 en partie supérieure. Le bac de rangement 32 peut être également disposé à l'envers sur la face supérieure 12 du socle 10 comme on le voit sur la figure 6. Dans ce cas, le pourtour 36 du bac de rangement 32, qui est alors orienté vers le bas, est retenu par la face interne 28 de la bordure périphérique 14.

Comme on peut le voir sur les figures 1 et 2, un passage longitudinal, 38 conçu notamment pour l'introduction d'une branche d'une fourche d'un chariot élévateur, débouche dans les deux petites faces latérales 20. Dans l'exemple, ce passage longitudinal 38 est réalisé sous la forme d'un tunnel qui débouche sur toute sa longueur sur la face inférieure 16 et qui est délimité entre deux embases longitudinales 40 de forme générale parallélépipédique du socle 10. Ces deux embases 40 constituent deux blocs massifs qui s'étendent dans la direction longitudinale du socle 10 et qui se raccordent respectivement aux deux grandes faces latérales 18. Il en résulte que les deux petites faces latérales 20 sont interrompues dans leur partie centrale par le passage longitudinal 38. Ce dernier interrompt l'échancrure périphérique 22 dans la région centrale de chacune des petites parois latérales 20.

Le socle 10 comprend en outre au moins un passage transversal 42, conçu notamment pour l'introduction d'une branche d'une fourche d'un chariot élévateur, débouchant dans les deux grandes faces latérales (figures 1 et 3).

Dans l'exemple, le socle 10 comprend deux passages transversaux 42 qui débouchent chacun dans les deux grandes faces latérales 18 par des ouvertures respectives 44 de forme générale rectangulaire. Ainsi, chaque passage transversal 42 est en fait composé de deux parties qui traversent respectivement les deux embases 40.

Par ailleurs, le socle comprend quatre évidements 46 (figures 1, 2, 3 et 4) formés respectivement dans les quatre faces latérales (les deux grandes faces 18 et les deux petites faces 20) pour permettre le passage de sangles d'arrimage 48. Une sangle d'arrimage 48 est montrée partiellement sur la figure 2. Elle se termine par un crochet 50 qui vient coopérer avec le socle 10, comme on le verra plus loin.

Dans l'exemple, chacun des évidements 46 débouche vers le haut dans la bordure périphérique 14, qui est de ce fait interrompue localement dans son épaisseur, et vers le bas dans un trou d'accrochage 52 pour chacune des grandes faces latérales 18 et dans un trou d'accrochage 54 pour chacune des petites faces latérales 20. Le trou 52 d'une grande face latérale 18 débouche dans une partie centrale de cette grande face 18 entre les deux ouvertures 44. Par ailleurs, le trou d'accrochage 54 de chacune des petites faces latérales 20 débouche dans une partie centrale de cette petite face 20 à proximité de la partie supérieure du passage 38.

Comme on le voit notamment sur la figure 2, chacun des évidements 46 présente une forme évasée à partir du trou d'accrochage 52 ou 54 de la face latérale 18 ou 20 correspondante en direction de la bordure périphérique 14.

Ces évidements 46 permettent le passage d'une sangle d'arrimage 48 et d'un crochet 50 en évitant ainsi que cette sangle et ce crochet dépassent de l'aplomb périphérique du socle 10, ce qui les protège contre des chocs accidentels, et évite ainsi un décrochage intempestif. De plus, comme ces évidements 46 ont une forme évasée, ils permettent à la sangle de prendre différentes orientations dans un intervalle angulaire A qui peut, par exemple, être de l'ordre de 90° (figure 2). Ainsi, ceci permet une position droite ou oblique de la sangle 48 en fonction de l'application souhaitée.

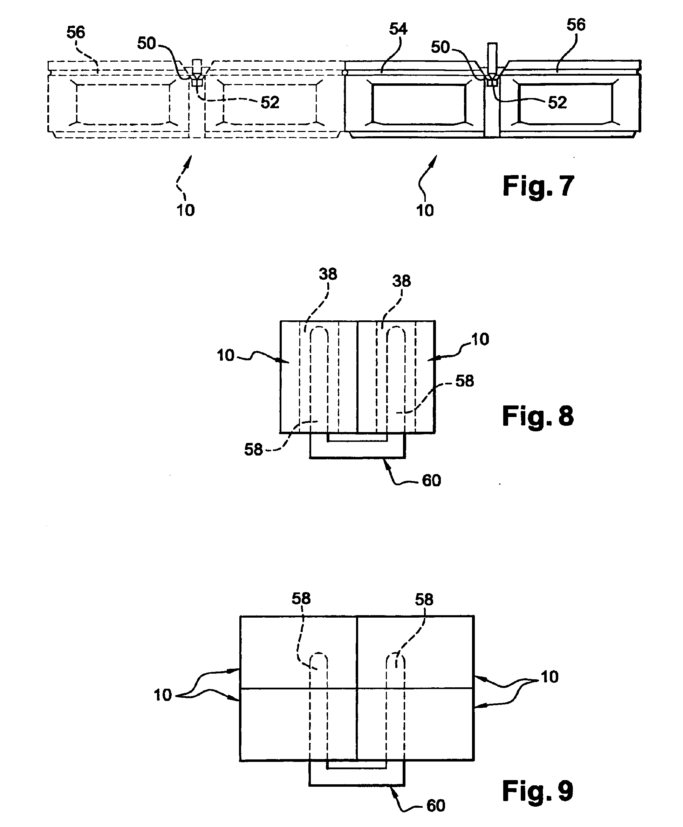

Lorsque deux socles sont disposés l'un à côté de l'autre par juxtaposition de deux grandes faces latérales 18, dans un même plan horizontal, il est possible d'engager deux crochets 50 dans les trous d'accrochage respectifs 52 des deux socles 10 (figure 7). Avantageusement, on prévoit alors une barre de liaison 54 qui réunit les deux crochets 50. Il est avantageux que cette barre de liaison 54 s'escamote dans les socles respectifs. C'est la raison pour laquelle il est prévu que chaque socle 10 comporte une rainure périphérique 56 continue formée sur les quatre faces latérales 18 et 20 en dessous de la bordure périphérique 14.

Comme déjà indiqué, les socles 10 et les piles de marchandises 32 qu'ils supportent (cartons, bacs de rangement, etc.) peuvent être manipulés individuellement ou bien être regroupés par deux ou par quatre et être ensuite dégroupés si besoin est.

La figure 8 montre schématiquement comment deux socles 10 peuvent être disposés côte à côte par juxtaposition de deux de leurs grandes faces latérales 18. Dans cette position, les deux passages longitudinaux respectifs 38 de deux socles permettent l'introduction des deux branches 58 de la fourche 60 d'un chariot élévateur (non représenté).

Il est possible également de regrouper quatre socles ensemble comme le montre la figure 9. Dans ce cas, les deux branches 58 d'une fourche 60 peuvent être introduites dans des passages transversaux respectifs 42 des socles.

Les socles de l'invention peuvent être réalisés en différentes dimensions. Dans un mode de réalisation préféré, ce socle a la forme générale d'un rectangle ayant des dimensions d'environ 600 mm x 400 mm et avec une hauteur d'environ 150 mm.

Le socle est avantageusement formé d'une seule pièce par moulage d'une matière plastique. Ce moulage peut être effectué par injection avec une matière plastique appropriée. Comme exemples de matière plastique, on peut citer le polypropylène, le polyéthylène à haute densité (PEHD), l'ABS, etc.

Les dimensions de 600 mm x 400 mm indiquées précédemment constituent un exemple préférentiel qui permet l'adaptation du socle 10 sur un plateau de chargement 26 de dimensions homologues. Ceci permet aussi de recevoir des bacs standard.

Ainsi, le socle peut recevoir une pile de bacs de dimensions 400 mm x 600 mm. Il peut aussi recevoir deux piles de bacs ayant chacun des dimensions de 300 mm x 400 mm, ou encore quatre piles de bacs ayant chacun des dimensions de 200 mm x 300 mm. Bien entendu, ces dimensions sont données ici à titre d'exemple.

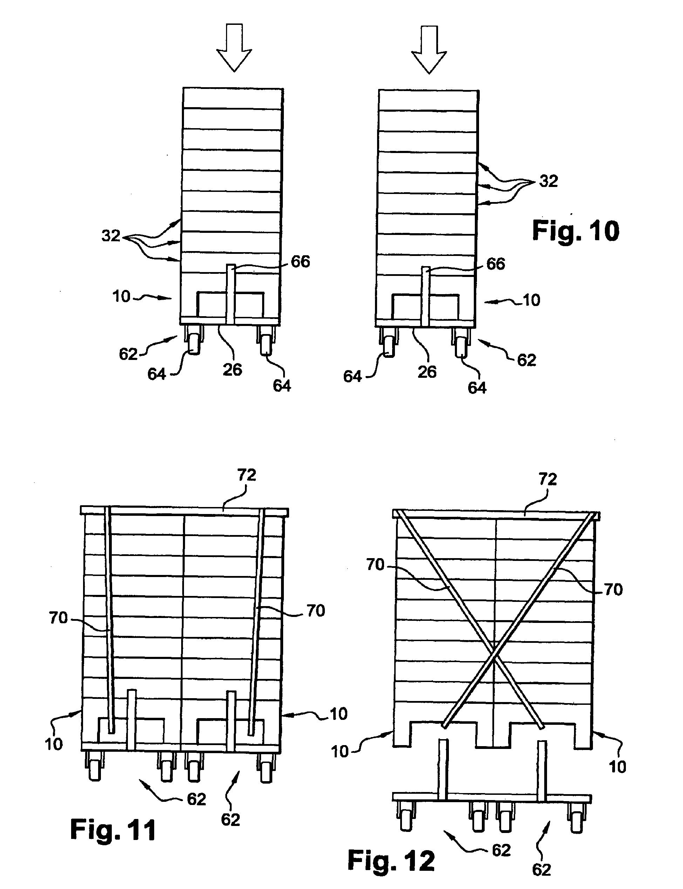

On se réfère maintenant aux figures 10 à 12 pour décrire l'utilisation d'un socle 10 selon l'invention.

Sur la figure 10, deux socles 10 sont disposés respectivement sur les plateaux de chargement respectifs 26 de deux chariots de manutention 62. Ces deux chariots peuvent être par exemple du type décrit dans le document EP 1 227 945 mentionné précédemment. Ces chariots 62 possèdent quatre roues 64 et un timon 66 pour permettre d'atteler un chariot, soit à un chariot précédent dans une file de chariots, soit à un tracteur approprié. Dans l'exemple, chacun des socles 10 supporte une pile verticale de plusieurs marchandises 32, ici des bacs analogues à ceux décrits précédemment en référence aux figures 5 et 6.

Au départ (figure 10), les deux chariots 62 sont complètement indépendants et supportent les piles respectives de bacs 32. Dans une étape suivante (figure 11), les deux chariots sont rapprochés et on place alors une coiffe commune 72 et des sangles respectives 70 recouvrant l'ensemble. À l'étape suivante (figure 12) on arrime conjointement les deux socles 10 et leurs piles respectives de bacs 32 au moyen de la coiffe commune 72 et des sangles d'arrimage 70 disposées en position oblique.

L'ensemble ainsi obtenu peut être soulevé des deux chariots comme on le voit sur la figure 12 au moyen d'un dispositif de levage approprié (non représenté) pour être par exemple disposé sur le plateau de chargement d'un chariot ou analogue. Inversement, en partant de deux piles de bacs réunies entre elles et disposées sur deux socles, on peut séparer ensuite ces deux socles selon des opérations inverses.

Bien entendu, ceci peut être transposé à plus de deux socles, par exemple quatre socles dans la configuration représentée précédemment sur la figure 9.

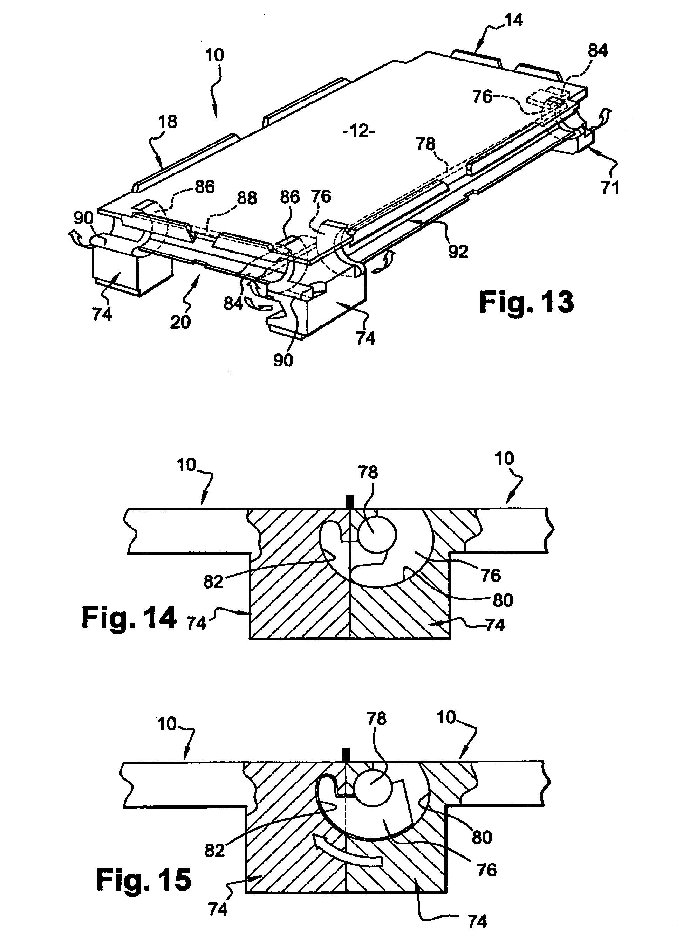

On se réfère maintenant à la figure 13 qui montre un socle 10 analogue à celui de la figure 1, les éléments communs étant désignés par les mêmes références. Le socle 10 est ici muni de quatre pieds d'extrémité 74, chacun constitué d'un bloc de forme générale parallélépipédique.

Le socle 10 de la figure 13 est muni d'organes de verrouillage disposés respectivement le long d'une grande face latérale 18 et le long d'une petite face latérale 20 adjacente pour permettre d'associer ce socle à au moins un socle adjacent, pour les réunir et les solidariser.

Les organes de verrouillage disposés le long de la grande face 18 comprennent deux crochets 76 espacés entre eux et solidaires d'un axe de pivotement commun 78 qui s'étend parallèlement à la direction de la grande face 18. Chacun des crochets 76 a la forme générale d'un C et est disposé dans un logement 80 aménagé dans un pied d'extrémité 74 du socle comme on le voit sur la figure 14. L'extrémité du crochet 76 est destinée à s'engager dans un évidemment correspondant 82 du pied d'extrémité 74 d'un socle 10 adjacent, comme on le voit sur la figure 14. Sur la figure 14, le crochet 76 est dans une position rentrée (position de déverrouillage) où il est escamoté dans le logement 80. Le crochet 76 peut être amené dans une position sortie (position de verrouillage), comme représenté sur la figure 15, par rotation d'environ un quart de tour comme montré par la flèche, ici dans le sens horaire. Dans la position sortie l'extrémité du crochet fait saillie du pied d'extrémité 74 et s'engage complètement dans l'évidemment 82, ce qui permet de verrouiller le socle 10 avec un socle 10 adjacent.

L'axe de pivotement 78 porte au moins un levier d'extrémité 84, selon l'exemple présenté, deux leviers 84, pouvant être actionnés pour déplacer l'organe de verrouillage, c'est-à-dire les deux crochets 76, de l'une à l'autre de la position rentrée et de la position sortie. Ces leviers 84 font saillie aux deux extrémités de la grande face latérale 18, c'est-à-dire respectivement sur les deux petites faces latérales 20 adjacentes. Ces leviers peuvent ainsi être actionnés au pied par un utilisateur à partir de l'une ou l'autre des deux petites faces latérales 20.

Le socle 10 de la figure 13 comprend de manière analogue des organes de verrouillage disposés le long d'une des petites faces 20. Ces organes comprennent deux crochets 86 espacés entre eux et solidaires d'un axe de pivotement commun 88 et susceptibles de se déplacer entre une position rentrée et une position sortie de façon analogue aux crochets 76. Dans cette forme de réalisation, l'axe de pivotement 88 s'étend dans la direction de la petite face latérale 20 précitée. L'axe de pivotement 88 porte, à ses deux extrémités, deux leviers 90 pouvant être actionnés pour déplacer l'organe de verrouillage, c'est-à-dire les deux crochets 86, de l'une à l'autre de la position rentrée et de la position sortie. L'actionnement des deux crochets 86 se fait donc à partir de l'une ou l'autre des grandes faces 18 du socle. Les leviers 90 peuvent aussi être actionnées au pied par un utilisateur.

Dans la forme de réalisation de la figure 13, les pieds d'extrémité 74 peuvent, le cas échéant, être assemblés sur le reste du socle pour faciliter le montage des organes de verrouillage, c'est-à-dire l'insertion des crochets 76 et 86 dans leurs logements 80 respectifs et l'engagement des axes de pivotement 78 et 88 dans des paliers appropriés formés dans le socle lui-même.

L'exemple de réalisation de la figure 13 présente respectivement deux crochets 76 disposés le long de la grande face 18 et deux crochets 86 disposés le long de la petite face latérale 20. Toutefois, la présente invention couvre également les modes de réalisations comprenant un unique crochet 76 disposé le long de la grande face 18 et/ou un crochet 86 disposé le long de la petite face latérale 20. De même, les socles comprenant trois crochets 76 et 86 ou plus font également partie intégrante de la présente invention.

Par ailleurs, le socle de la figure 13 comprend une rainure périphérique continue 92 analogue à la rainure périphérique continue 56 décrite plus haut.

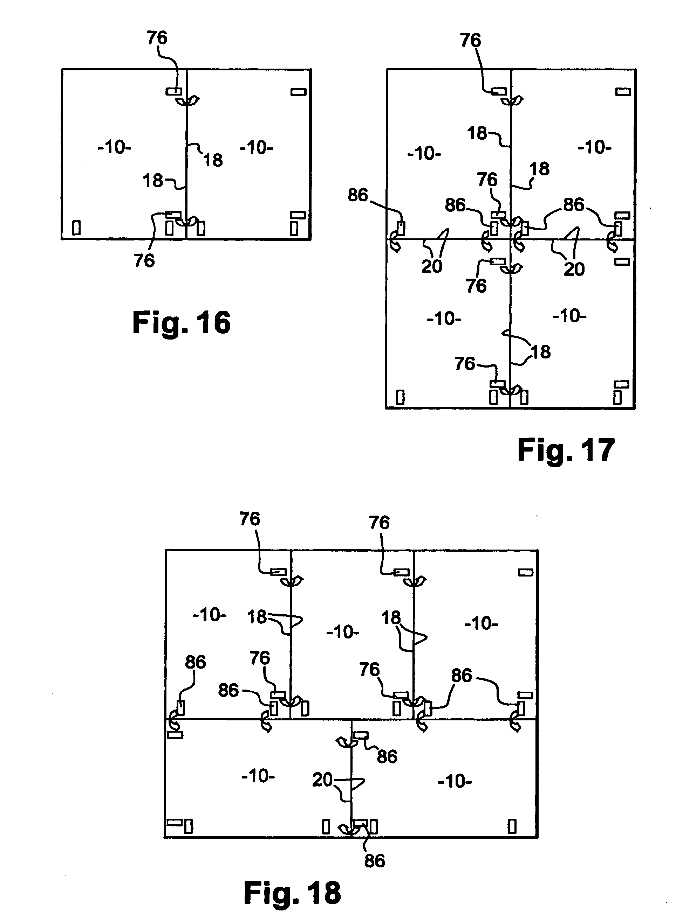

La figure 16 montre de façon schématique l'assemblage de deux socles 10 le long de deux grandes faces 18 adjacentes par les crochets 76 de l'un des socles.

La figure 17 montre l'assemblage de quatre socles le long de grandes faces adjacentes 18 ou de petites faces adjacentes 20 par des crochets respectifs 76 ou 86 comme montré schématiquement.

La figure 18 montre l'assemblage de cinq socles par leurs crochets respectifs 76 ou 86 pour former un socle rectangulaire. Trois socles sont disposés adjacents le long de deux grandes faces latérales 18. Les deux autres socles sont disposés adjacents le long de deux petites faces latérales 20 et sont accolées aux trois socles précités, dans une direction généralement perpendiculaire. Pour former un ensemble de forme rectangulaire, cela suppose que chacune des grandes faces latérales ait une longueur correspondant à une fois et demi celle de chacune des petites faces latérales.

À titre d'exemple, chaque socle peut avoir la forme générale d'un rectangle de dimensions d'environ 600 mm x 400 mm, comme déjà indiqué. Dans ce cas, les socles assemblés présentent les dimensions suivantes : 600 mm x 800 mm (figure 16), 800 mm x 1200 mm (figure 17) et 1000 mm x 1200 mm (figure 18).

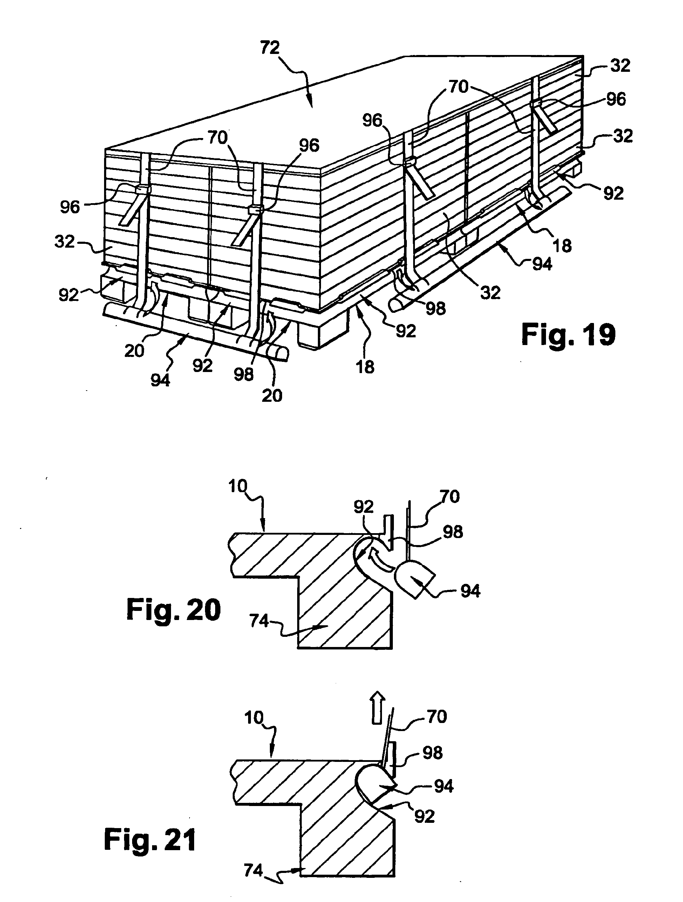

La figure 19 montre quatre socles selon la figure 13 disposés de façon adjacente dans une configuration analogue à celle de la figure 17. Ces socles sont assemblés entre eux par leurs moyens de verrouillage (non visibles sur la figure 19). Les socles supportent des marchandises 32, par exemple des bacs de rangement, au dessus desquelles est disposée une coiffe commune 72. Cette coiffe 72 est maintenue par des sangles 70 analogues à celles décrites précédemment. Chaque sangle 70 est disposée de manière sensiblement verticale, son extrémité supérieure étant fixée à la coiffe 72 et son extrémité inférieure étant fixée à une barre de liaison 94 analogue à celle décrite plus haut. Une boucle de serrage 96 permet d'assurer la tension de la sangle.

On voit sur la figure 19 une barre de liaison 94 reliée à deux sangles 70 et susceptibles de s'engager dans les rainures respectives 92 alignées de deux socles 10 du côté des petites faces latérales 20. La longueur de la barre de liaison 94 doit donc correspondre sensiblement au double de la longueur d'une petite face latérale. Par ailleurs, du côté des grandes faces latérales 18, une autre barre de liaison 94 est réunie à la coiffe par deux autres sangles 70. Cette barre de liaison 94 est reçue dans les rainures respectives 92 alignées de deux socles 10, du côté des grandes faces. Cette barre de liaison aura de préférence une longueur sensiblement égale au double de la longueur d'une grande face latérale 18.

Comme on le voit sur la figure 20, la rainure périphérique 92 forme un logement de retenue pour la barre de liaison 94, ce logement ayant son ouverture dirigée vers le bas. Dans l'exemple, le sommet du logement a une forme généralement arrondie et la section transversale de la barre de liaison comporte un sommet de forme générale homologue.

La sangle 70 étant détendue, la barre de liaison 94 peut s'engager dans la rainure 92 par un mouvement vers le haut comme représenté par la flèche de la figure 20. Il suffit ensuite de réaliser la tension des sangles 10 en exerçant un serrage par les boucles 96 respectives pour permettre à la barre de liaison 94 de s'engager au fond de la rainure 92 comme montré sur la figure 1.

La tension verticale exercée par la sangle 70 permet un maintien de la barre de liaison 94 dans les rainures alignées 92 de deux socles adjacents. Un évidemment 98 est formé à chaque fois au milieu de chacune des faces latérales 18 et 20 du socle pour permettre le passage de la sangle 70 comme on le voit sur les figures 20 et 21. Cela suppose que les sangles 70 seront disposées à chaque fois sensiblement au milieu des petites faces et des grandes faces latérales des socles.

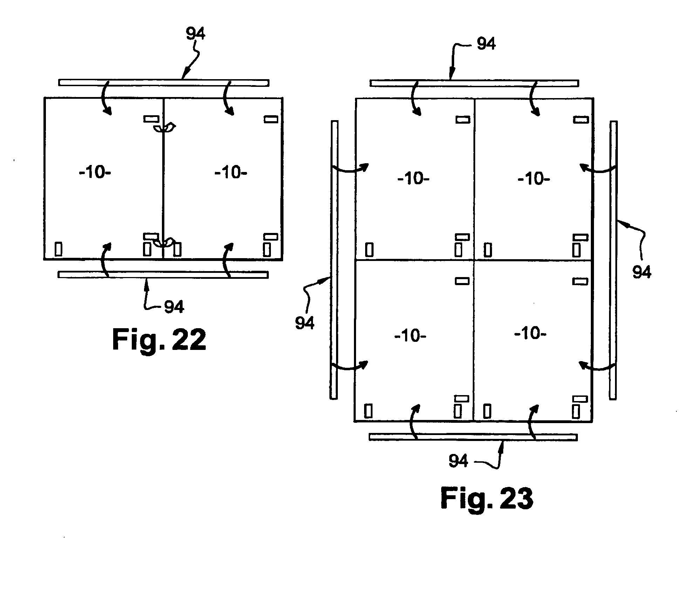

La figure 22 montre l'utilisation de deux barres de liaison 94 dans le cas de deux socles 10 adjacents dans une configuration analogue à celle de la figure 16.

La figure 23 montre l'utilisation de quatre barres de liaison 94 pour quatre socles adjacents dans une configuration analogue à celle de la figure 17.

Les barres de liaison 94 décrites précédemment ont généralement la même fonction que les barres de liaison 54, mais ce sont ici les rainures 92 qui, grâce à leur géométrie particulière, réalisent leur accrochage dans les socles 10.

L'invention s'applique ainsi à la manutention de marchandises, en particulier de cartons ou de bacs de rangement servant à transporter des pièces diverses en particulier pour des chaînes de fabrication industrielle.

Bien évidemment, l'invention n'est pas limitée aux modes de réalisation décrits précédemment et fournis uniquement à titre d'exemple et englobe d'autres variantes que pourra envisager l'homme du métier dans le cadre de la présente invention et notamment toutes combinaisons des différents modes de réalisation décrits précédemment.

## Revendications

1. Dispositif de chargement et de déchargement pour un chariot de manutention (62) comportant un plateau de chargement (26), comprenant un socle (10) amovible de dimensions adaptées à celles du plateau de chargement (26) du chariot (62), le socle (10) présentant une face supérieure (12) généralement plane apte à recevoir des marchandises (32) et entourée d'une bordure périphérique (14) de retenue des marchandises (32), une face inférieure (16) conformée pour maintenir le socle (10) sur le plateau de chargement (26) du chariot (62) et quatre faces latérales (18, 20) comprenant deux grandes faces latérales opposées (18) reliées à des grands côtés de la face supérieure (12) et deux petites faces latérales opposées (20) reliées à des petits côtés de la face supérieure (12),
le socle (10) comprenant en outre un passage longitudinal (38), réalisé sous la forme d'un tunnel et conçu pour l'introduction d'une branche d'une fourche d'un chariot élévateur, qui débouche dans les deux petites faces latérales (18) et sur toute sa longueur sur la face inférieure (16) et qui est délimité entre deux embases longitudinales (40) du socle (10) se raccordant respectivement aux deux grandes faces latérales (20), le socle (10) étant muni d'organes de verrouillage (76 ; 86) disposés respectivement le long de deux faces latérales adjacentes (18, 20) pour associer ce socle (10) à au moins un socle (10) adjacent,
**caractérisé en ce que** chaque organe de verrouillage comprend au moins un crochet (76 ; 86) solidaire d'un axe de pivotement (78 ; 88) et susceptible de se déplacer entre une position rentrée où il est escamoté dans le socle (10) et une position sortie où il fait saillie du socle (10) pour s'engager dans un évidement respectif (82) d'un socle (10) adjacent.

2. Dispositif de chargement et de déchargement selon la revendication 1, **caractérisé en ce que** le socle (10) comprend une échancrure périphérique (22) formée à la jonction de la face inférieure (16) et des quatre faces latérales (18, 20).

3. Dispositif de chargement et de déchargement selon la revendication 2, **caractérisé en ce que** l'échancrure périphérique (22) est dimensionnée pour s'emboîter dans un cadre périphérique (24) que comporte le plateau de chargement (26) du chariot de manutention (62) pour positionner et maintenir le socle (10) sur le cadre périphérique (24).

4. Dispositif de chargement et de déchargement selon la revendication 2 ou 3, **caractérisé en ce que** l'échancrure périphérique (22) d'un premier socle (10) est apte à s'emboîter dans la bordure périphérique (14) d'un second socle situé immédiatement en dessous du premier socle dans une pile de socles superposés.

5. Dispositif de chargement et de déchargement selon l'une des revendications 1 à 4, **caractérisé en ce que** la bordure périphérique (14) comprend une face interne (28) qui se raccorde perpendiculairement à la face supérieure (12) du socle (10) et un bord supérieur (30) qui relie la face interne (28) aux faces latérales (18, 20).

6. Dispositif de chargement et de déchargement selon l'une des revendications 1 à 5, **caractérisé en ce que** le socle (10) comprend en outre au moins un passage transversal (42), conçu notamment pour l'introduction d'une branche d'une fourche d'un chariot élévateur, débouchant dans les deux grandes faces latérales (20).

7. Dispositif de chargement et de déchargement selon la revendication 6, **caractérisé en ce que** le socle (10) comprend deux passages transversaux (42) débouchant chacun dans les deux grandes faces latérales (20) par des ouvertures (44) de forme générale rectangulaire.

8. Dispositif de chargement et de déchargement selon l'une des revendications 1 à 7, **caractérisé en ce que** le socle (10) comprend au moins un évidement (46) formé respectivement dans une des faces latérales (18, 20) pour permettre le passage d'une sangle d'arrimage (48).

9. Dispositif de chargement et de déchargement selon la revendication 8, **caractérisé en ce que** l'évidement (46) débouche vers le haut dans la bordure périphérique (14) et vers le bas dans un trou d'accrochage (52, 54) de la face latérale (18, 20) correspondante, aménagé pour recevoir un crochet de la sangle d'arrimage (48).

10. Dispositif de chargement et de déchargement selon la revendication 9, **caractérisé en ce que** l'évidement (46) présente une forme évasée à partir du trou d'accrochage (52, 54) de la face latérale en direction de la bordure périphérique (14).

11. Dispositif de chargement et de déchargement selon l'une des revendications 1 à 10, **caractérisé en ce qu'**il comporte une rainure périphérique continue (56 ; 92) formée sur les quatre faces latérales (18, 20) en dessous de la bordure périphérique (14).

12. Dispositif de chargement et de déchargement selon la revendication 11, **caractérisé en ce que** la rainure périphérique continue (56 ; 92) forme, sur chacune des faces latérales (18, 20), un logement pour la réception d'une barre de liaison (54 ; 94) reliée à des sangles d'arrimage (70).

13. Dispositif de chargement et de déchargement selon la revendication 12, **caractérisé en ce que** la rainure périphérique continue (56 ; 92) forme un logement de retenue pour la barre de liaison (54 ; 94) lorsque les sangles d'arrimage (70) sont sous tension.

14. Dispositif de chargement et de déchargement selon l'une quelconque des revendications précédentes, **caractérisé en ce que** le crochet (76 ; 86) est disposé dans un logement (80) aménagé dans un pied d'extrémité (74) du socle (10).

15. Dispositif de chargement et de déchargement selon l'une quelconque des revendications 1 à 13 et de la revendication 14, **caractérisé en ce que** l'axe de pivotement (78 ; 88) porte au moins un levier d'extrémité (84 ; 90) pouvant être actionné pour déplacer l'organe de verrouillage de l'une à l'autre de la position rentrée à la position sortie.

16. Dispositif de chargement et de déchargement selon l'une des revendications 1 à 15, **caractérisé en ce que** le socle (10) est formé d'une seule pièce par moulage d'une matière plastique.

17. Dispositif de chargement et de déchargement selon l'une des revendications 1 à 16, **caractérisé en ce que** le socle (10) a la forme générale d'un rectangle ayant des dimensions d'environ 600 mm x 400 mm.

18. Dispositif de chargement et de déchargement selon l'une des revendications 1 à 17, **caractérisé en ce que** le socle (10) a une hauteur d'environ 150 mm.

## Patentansprüche

1. Lade- und Entladevorrichtung für ein eine Ladeplatte (26) aufweisendes Flurförderzeug (62), die eine entfernbare Grundplatte (10) mit an die Abmessungen der Ladeplatte (26) des Förderzeugs (62) angepassten Abmessungen enthält, wobei die Grundplatte (10) eine allgemein ebene Oberseite (12), die Waren (32) aufnehmen kann und von einem Umfangsrand (14) für den Halt der Waren (32) umgeben ist, eine Unterseite (16), die ausgebildet ist, um die Grundplatte (10) auf der Ladeplatte (26) des Förderzeugs (62) zu halten, und vier Seitenflächen (18, 20) hat, die zwei gegenüberliegende große Seitenflächen (18), die mit großen Seiten der Oberseite (12) verbunden sind, und zwei gegenüberliegende kleine Seitenflächen (20) enthalten, die mit kleinen Seiten der Oberseite (12) verbunden sind,
wobei die Grundplatte (10) außerdem einen Längsdurchgang (38) enthält, der in Form eines Tunnels hergestellt und für die Einführung einer Zinke einer Gabel eines Hubwagens konzipiert ist, der in den zwei kleinen Seitenflächen (18) und über seine ganze Länge an der Unterseite (16) mündet, und der zwischen zwei Längssockeln (40) der Grundplatte (10) begrenzt ist, die je an die zwei großen Seitenflächen (20) anschließen, wobei die Grundplatte (10) mit Verriegelungsorganen (76; 86) versehen ist, die je entlang von zwei benachbarten Seitenflächen (18, 20) angeordnet sind, um diese Grundplatte (10) mit mindestens einer benachbarten Grundplatte (10) zu vereinigen, **dadurch gekennzeichnet, dass** jedes Verriegelungsorgan mindestens einen Haken (76; 86) enthält, der fest mit einer Schwenkachse (78; 88) verbunden ist und sich zwischen einer eingezogenen Stellung, in der er in die Grundplatte (10) zurückgezogen ist, und einer ausgefahrenen Stellung verschieben kann, in der er aus der Grundplatte (10) vorsteht, um sich in eine jeweilige Aussparung (82) einer benachbarten Grundplatte (10) einzufügen.

2. Lade- und Entladevorrichtung nach Anspruch 1, **dadurch gekennzeichnet, dass** die Grundplatte (10) eine Umfangsauskehlung (22) enthält, die an der Verbindung der Unterseite (16) und der vier Seitenflächen (18, 20) ausgebildet ist.

3. Lade- und Entladevorrichtung nach Anspruch 2, **dadurch gekennzeichnet, dass** die Umfangsauskehlung (22) bemessen ist, um sich in einen Umfangsrahmen (24) einzufügen, den die Ladeplatte (26) des Flurförderzeugs (62) aufweist, um die Grundplatte (10) auf dem Umfangsrahmen (24) zu positionieren und zu halten.

4. Lade- und Entladevorrichtung nach Anspruch 2 oder 3, **dadurch gekennzeichnet, dass** die Umfangsauskehlung (22) einer ersten Grundplatte (10) sich in den Umfangsrand (14) einer zweiten Grundplatte einfügen kann, die sich direkt unter der ersten Grundplatte in einem Stapel von übereinander angeordneten Grundplatten befindet.

5. Lade- und Entladevorrichtung nach einem der Ansprüche 1 bis 4, **dadurch gekennzeichnet, dass** der Umfangsrand (14) eine Innenseite (28), die lotrecht an die Oberseite (12) der Grundplatte (10) anschließt, und einen oberen Rand (30) enthält, der die Innenseite (28) mit den Seitenflächen (18, 20) verbindet.

6. Lade- und Entladevorrichtung nach einem der Ansprüche 1 bis 5, **dadurch gekennzeichnet, dass** die Grundplatte (10) außerdem mindestens einen insbesondere für die Einführung einer Zinke einer Gabel eines Hubwagens konzipierten Querdurchgang (42) enthält, der in die zwei großen Seitenflächen (20) mündet.

7. Lade- und Entladevorrichtung nach Anspruch 6, **dadurch gekennzeichnet, dass** die Grundplatte (10) zwei Querdurchgänge (42) enthält, die je in den zwei großen Seitenflächen (20) durch Öffnungen (44) von allgemein rechteckiger Form münden.

8. Lade- und Entladevorrichtung nach einem der Ansprüche 1 bis 7, **dadurch gekennzeichnet, dass** die Grundplatte (10) mindestens eine Aussparung (46) enthält, die je in einer der Seitenflächen (18, 20) ausgebildet ist, um den Durchgang eines Verzurrgurts (48) zu erlauben.

9. Lade- und Entladevorrichtung nach Anspruch 8, **dadurch gekennzeichnet, dass** die Aussparung (46) nach oben in den Umfangsrand (14) und nach unten in ein Befestigungsloch (52, 54) der entsprechenden Seitenfläche (18, 20) mündet, das eingerichtet ist, um einen Haken des Verzurrgurts (48) zu empfangen.

10. Lade- und Entladevorrichtung nach Anspruch 9, **dadurch gekennzeichnet, dass** die Aussparung (46) eine sich ausgehend vom Befestigungsloch (52, 54) der Seitenfläche in Richtung des Umfangsrands (14) ausweitende Form aufweist.

11. Lade- und Entladevorrichtung nach einem der Ansprüche 1 bis 10, **dadurch gekennzeichnet, dass** sie eine durchgehende Umfangsrille (56; 92) aufweist, die an den vier Seitenflächen (18, 20) unter dem Umfangsrand (14) ausgebildet ist.

12. Lade- und Entladevorrichtung nach Anspruch 11, **dadurch gekennzeichnet, dass** die durchgehende Umfangsrille (56 ; 92) auf jeder der Seitenflächen (18, 20) eine Aufnahme zum Empfang einer Verbindungsstange (54; 94) bildet, die mit Verzurrgurten (70) verbunden ist.

13. Lade- und Entladevorrichtung nach Anspruch 12, **dadurch gekennzeichnet, dass** die durchgehende Umfangsrille (56; 92) eine Halteaufnahme für die Verbindungsstange (54; 94) bildet, wenn die Verzurrgurte (70) unter Spannung sind.

14. Lade- und Entladevorrichtung nach einem der vorhergehenden Ansprüche, **dadurch gekennzeichnet, dass** der Haken (76; 86) in einer Aufnahme (80) angeordnet ist, die in einem Endfuß (74) der Grundplatte (10) eingerichtet ist.

15. Lade- und Entladevorrichtung nach einem der Ansprüche 1 bis 13 und nach Anspruch 14, **dadurch gekennzeichnet, dass** die Schwenkachse (78; 88) mindestens einen Endhebel (84; 90) trägt, der betätigt werden kann, um das Verriegelungsorgan von der eingezogenen Stellung in die ausgefahrene Stellung zu verschieben.

16. Lade- und Entladevorrichtung nach einem der Ansprüche 1 bis 15, **dadurch gekennzeichnet, dass** die Grundplatte (10) durch Formen eines Kunststoffs aus einem Stück gebildet wird.

17. Lade- und Entladevorrichtung nach einem der Ansprüche 1 bis 16, **dadurch gekennzeichnet, dass** die Grundplatte (10) die allgemeine Form eines Rechtecks mit Abmessungen von etwa 600 mm x 400 mm hat.

18. Lade- und Entladevorrichtung nach einem der Ansprüche 1 bis 17, **dadurch gekennzeichnet, dass** die Grundplatte (10) eine Höhe von etwa 150 mm hat.

## Claims

1. Loading and unloading device for a handling trolley (62) comprising a loading platform (26), comprising a removable plinth (10) whose dimensions match those of the loading platform (26) of the trolley (62), the plinth (10) having a generally flat upper face (12) which is able to receive goods (32) and is surrounded by a peripheral rim (14) for retaining the goods (32), a lower face (16) formed so as to hold the plinth (10) on the loading platform (26) of the trolley (62) and four lateral faces (18, 20) comprising two large opposite lateral faces (18) connected to large sides of the upper face (12) and two small opposite lateral faces (20) connected to small sides of the upper face (12),
the plinth (10) moreover comprising a longitudinal passage (38), created in the form of a tunnel and designed to allow the introduction of a tine of a fork of a forklift truck, which opens in the two small lateral faces (18) and over its entire length on the lower face (16) and which is delimited between two longitudinal bases (40) of the plinth (10) which respectively connect to the two large lateral faces (20), the plinth (10) being provided with locking members (76; 86) arranged respectively along two adjacent lateral faces (18, 20) to link this plinth (10) with at least one adjacent plinth (10), **characterized in that** each locking member comprises at least one hook (76; 86) which is secured to a pivot spindle (78; 88) and is able to move between a withdrawn position in which it is retracted within the plinth (10) and an extended position in which it projects from the plinth (10) in order to engage in a respective recess (82) of an adjacent plinth (10).

2. Loading and unloading device according to Claim 1, **characterized in that** the plinth (10) comprises a peripheral notch (22) formed at the junction of the lower face (16) and the four lateral faces (18, 20).

3. Loading and unloading device according to Claim 2, **characterized in that** the peripheral notch (22) is dimensioned so as to slot into a peripheral frame (24) which the loading platform (26) of the handling trolley (62) comprises for the purpose of positioning and holding the plinth (10) on the peripheral frame (24).

4. Loading and unloading device according to Claim 2 or 3, **characterized in that** the peripheral notch (22) of a first plinth (10) is able to slot into the peripheral rim (14) of a second plinth located immediately below the first plinth, in a pile of superposed plinths.

5. Loading and unloading device according to one of Claims 1 to 4, **characterized in that** the peripheral rim (14) comprises an internal face (28) which connects perpendicularly to the upper face (12) of the plinth (10), and an upper edge (30) which connects the internal face (28) to the lateral faces (18, 20).

6. Loading and unloading device according to one of Claims 1 to 5, **characterized in that** the plinth (10) further comprises at least one transverse passage (42), designed notably for the introduction of a tine of a fork of a forklift truck, which opens in the two large lateral faces (20).

7. Loading and unloading device according to Claim 6, **characterized in that** the plinth (10) comprises two transverse passages (42), each of which opens in the two large lateral faces (20) via generally rectangular openings (44).

8. Loading and unloading device according to one of Claims 1 to 7, **characterized in that** the plinth (10) comprises at least one recess (46) formed respectively in one of the lateral faces (18, 20) to allow the passage of a securing strap (48).

9. Loading and unloading device according to Claim 8, **characterized in that** the recess (46) opens upwards in the peripheral rim (14) and downwards in a latching hole (52, 54) of the corresponding lateral face (18, 20), designed to receive a hook of the securing strap (48).

10. Loading and unloading device according to Claim 9, **characterized in that** the recess (46) widens from the latching hole (52, 54) of the lateral face towards the peripheral rim (14).

11. Loading and unloading device according to one of Claims 1 to 10, **characterized in that** it comprises a continuous peripheral groove (56; 92) formed on the four lateral faces (18, 20) below the peripheral rim (14).

12. Loading and unloading device according to Claim 11, **characterized in that** the continuous peripheral groove (56; 92) forms, on each of the lateral faces (18, 20), a hollow for receiving a connecting bar (54; 94) connected to securing straps (70).

13. Loading and unloading device according to Claim 12, **characterized in that** the continuous peripheral groove (56; 92) forms a retaining hollow for the connecting bar (54; 94) when the securing straps (70) are under tension.

14. Loading and unloading device according to any one of the preceding claims, **characterized in that** the hook (76; 86) is arranged in a hollow (80) created in an end foot (74) of the plinth (10).

15. Loading and unloading device according to any one of Claims 1 to 13 and Claim 14, **characterized in that** the pivot spindle (78; 88) bears at least one end lever (84; 90) which can be actuated in order to move the locking member from one to the other of the withdrawn position and the extended position.

16. Loading and unloading device according to one of Claims 1 to 15, **characterized in that** the plinth (10) is formed as a single piece by moulding a plastic material.

17. Loading and unloading device according to one of Claims 1 to 16, **characterized in that** the plinth (10) is in the general shape of a rectangle having dimensions of approximately 600 mm x 400 mm.

18. Loading and unloading device according to one of Claims 1 to 17, **characterized in that** the plinth (10) is approximately 150 mm high.
